# EUROPEAN PATENT SPECIFICATION

(11) **EP 3 225 441 B1**
(45) Date of publication and mention of the grant of the patent: **02.12.2020**
(21) Application number: 17162656.7
(22) Date of filing: 23.03.2017
(51) Int. Cl.: B60H 1/34

(54) **VEHICULAR REGISTER APPARATUS**
LUFTAUSSTRÖMER FÜR FAHRZEUG
AÉRATEUR POUR VÉHICULE

(30) Priority: 31.03.2016 JP 2016070027
(43) Date of publication of application: 04.10.2017
(73) Proprietor: SHIGERU CO., LTD., Ota-shi, Gunma 373-8588 (JP); Dr. Schneider Kunststoffwerke GmbH, 96317 Kronach (DE)
(72) Inventor: Tajima, Takanori, Ota-shi, Gunma 373-8588 (JP)
(74) Representative: Pröll, Jürgen

(56) References cited:
- CN-A- 102 259 573
- DE-A1-102010 008 377
- JP-A- 2002 293 133
- KR-A- 20070 059 468
- US-A- 5 690 550
- US-A1- 2011 154 850

## Description

### BACKGROUND

### 1. Field of the Invention

The invention relates to a register apparatus for blowing air from an air conditioner to a vehicle room.

### 2. Description of Related Art

JP-A-2007-076481 discloses a register apparatus installed in a vehicular cluster panel (interior panel). The register apparatus includes an apparatus body having a ventilation path, a blow outlet side fin assembly arranged in a blow outlet side of the ventilation path, and a back side fin assembly arranged in the back of the ventilation path. The blow outlet side fin assembly has plural fins spaced in a vertical direction and also extending in a left-right direction in parallel with each other, and a coupling link extending in the vertical direction and rotatably coupled to these fins. The back side fin assembly has plural fins spaced in the left-right direction and also extending in the vertical direction in parallel with each other, and a coupling link extending in the left-right direction and rotatably coupled to these fins.

The central fin of the blow outlet side fin assembly is provided with an operating knob and when this operating knob is gripped and moved in the vertical direction, the central fin is swung and also the other fins are swung through the coupling link and thereby, a blow direction can be adjusted in the vertical direction.

The operating knob is slidable in the left-right direction and is engaged with the central fin of the back side fin assembly. When this operating knob is slid in the left-right direction, the central fin of the back side fin assembly is swung and also the other fins are swung through the coupling link and thereby, the blow direction can be adjusted in the left-right direction.

In the register apparatus of JP-A-2007-076481, the blow direction of air can be changed, but all the fins are formed in parallel in each of the fin assemblies, with the result that the air is blown in a narrow angle range (spot blowing), and a crew may feel uncomfortable.

A register apparatus of JP-A-2009-292459 has a function capable of selecting a spot blowing mode of blowing air with plural fins formed in substantially parallel and a diffusion blowing mode of increasing an angle range of blowing. Concretely, the register apparatus includes a cylindrical cam member made by forming plural (the number equal to that of fins) cam grooves on a peripheral surface, plural (the number equal to that of fins) sliders slidably supported in the cam member in its longitudinal direction, and an actuator for rotating and driving the cam member. The sliders have projections fitted into the cam grooves. The plural sliders are formed with engaging grooves in parallel with each other, and projections of the fins are fitted into the engaging grooves. The projections of these fins are positioned in the back side from its swing axis line.

In the register apparatus of JP-A-2009-292459, when the cam member is rotated by driving the actuator, in a predetermined angle range, all the sliders are slid by the same amount and accordingly, all the fins are swung by the same angle. As a result, with the fins in parallel, the spot blowing is performed and a blow direction is adjusted. When the cam member is rotated in a different angle range, slide amounts of the plural sliders differ and accordingly, swing amounts of the plural fins differ, with the result that the plural fins are diffused so as to be mutually separated toward the vehicle room side, and the diffusion blowing is performed.

The register apparatus of JP-A-2009-292459 has a large number of components constructing a cam mechanism and a complicated and high-cost structure. Moreover, KR 10 2007 059 468 A discloses an air vent comprising an air duct, a plurality of vertical wings, a plurality of horizontal wings, a knob for controlling the wings and a spacer over which the horizontal wings are mounted. The spacer include a plurality of guide passages enabling the horizontal wings to diverge in a pulled out state.

### SUMMARY

In accordance with embodiments, a vehicular register apparatus includes an apparatus body having a ventilation path with a downstream end provided as a blow outlet to a vehicle room. Fins are arranged in the ventilation path. The fins are spaced to each other in a first direction intersecting with an airflow direction. Each of the fins extends in a second direction intersecting with the airflow direction and the first direction. The fins respectively have shaft parts for supporting the fins on the apparatus body. The apparatus body includes guide passages for swingably and slidably supporting the shaft parts. The guide passages are formed so as to be apart in the first direction from each other toward the vehicle room.

### BRIEF DESCRIPTION OF THE DRAWINGS

Fig. 1 is a front view of a vehicular register apparatus according to a first embodiment not being part of the invention, and shows a state in which a cover frame is omitted.
Fig. 2 is an exploded perspective view of the register apparatus, and shows a state in which a back side fin assembly is omitted.
Fig. 3 is a sectional view taken on arrow A-A of Fig. 1.
Fig. 4 is an enlarged plan view showing an upper side guide passage group of the register apparatus.
Figs. 5A and 5B are enlarged plan views of a blow outlet side fin assembly of the register apparatus. Fig. 5A shows a state in which a spot blowing mode is performed. Fig. 5B shows a state in which a diffusion blowing mode is performed.
Fig. 6 is an enlarged plan view of an upper side guide passage group in a vehicular register apparatus according to a second embodiment according to the invention
Figs. 7A and 7B are enlarged plan views of a blow outlet side fin assembly in the register apparatus of the second embodiment. Fig. 7A shows a state in which a spot blowing mode is performed. Fig. 7B shows a state in which a diffusion blowing mode is performed.

### DETAILED DESCRIPTION

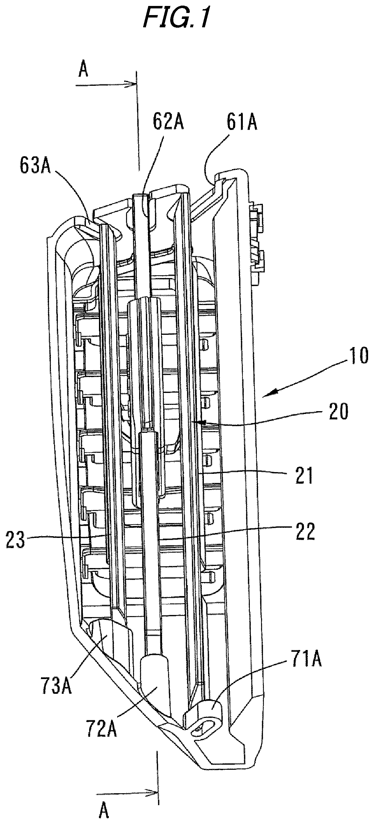

A first embodiment will hereinafter be described with reference to Figs. 1 to 5. A register apparatus shown in Figs. 1 to 3 is installed in a vehicular instrument panel (interior panel), and blows temperature-controlled air from an air conditioner toward a vehicle room. In the following description of the register apparatus, the front-back and left-right of the register apparatus are defined according to the front-back and left-right of a vehicle.

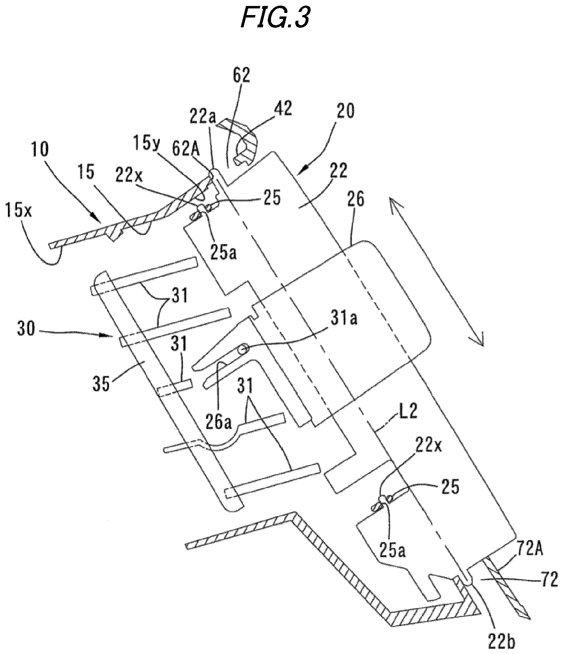

The register apparatus mainly includes an apparatus body 10 made of a tubular casing having a ventilation path 15 extending in a front-back direction, a blow outlet side fin assembly 20, and a back side fin assembly 30 (shown in only Fig. 3).

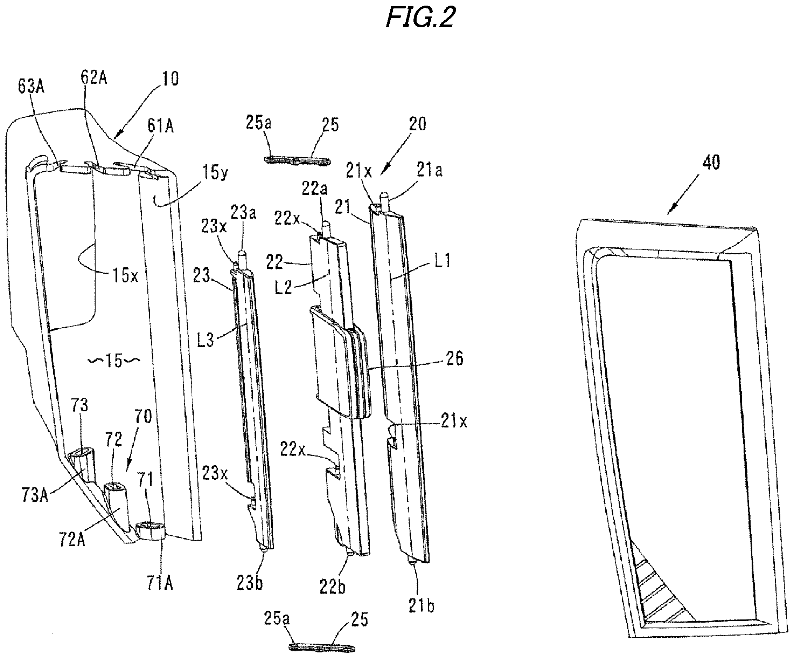

A cover frame 40 (shown in only Fig. 2) is attached to the instrument panel so as to cover a peripheral edge part of the apparatus body 10 from the vehicle room side.

The upstream end of the ventilation path 15 of the apparatus body 10 forms an air inlet 15x connected to a duct from the air conditioner, and the downstream end of the ventilation path 15 forms a blow outlet 15y.

The blow outlet side fin assembly 20 is arranged in the downstream side of the ventilation path 15, that is, the side of the blow outlet 15y, and the back side fin assembly 30 is arranged in the upstream side, that is, the back side from the blow outlet side fin assembly in the ventilation path 15.

The blow outlet side fin assembly 20 has plural (for example, three) fins 21, 22, 23, two coupling links 25 for coupling these fins 21, 22, 23, and an operating knob 26 supported in the central (intermediate) fin 22 (reference fin) slidably in its longitudinal direction. The fins 21, 22, 23 are mutually spaced in a left-right direction (first direction), and have elongated plate shapes extending in a vertical direction, more concretely, a direction (second direction) inclined to the front and back as shown in Fig. 3.

The upper ends of the fins 21, 22, 23 are respectively formed with shaft parts 21a, 22a, 23a (first shaft parts) and also, the lower ends of the fins are respectively formed with shaft parts 21b, 22b, 23b (second shaft parts). As described below, the fins 21, 22, 23 are respectively supported in the apparatus body 10 so as to be swingable around a swing axis line L1 passing through the shaft parts 21a, 21b, a swing axis line L2 passing through the shaft parts 22a, 22b, and a swing axis line L3 passing through the shaft parts 23a, 23b.

The fins 21, 22, 23 are respectively formed with projections 21x, 22x, 23x in two upper and lower places. These projections 21x, 22x, 23x are positioned in the backs from the swing axis lines L1, L2, L3, and are projected in parallel with these swing axis lines L1, L2, L3. Engaging holes 25a of the coupling links 25 are rotatably fitted into the upper and lower projections 21x, 22x, 23x, respectively, and thereby, the fins 21, 22, 23 are mutually coupled through the coupling links 25. A distance between the swing axis line L1 and the projection 21x of the fin 21, a distance between the swing axis line L2 and the projection 22x of the fin 22, and a distance between the swing axis line L3 and the projection 23x of the fin 23 are equal mutually.

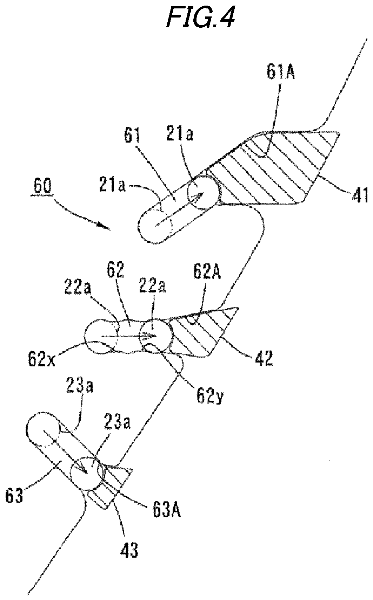

A support structure of the blow outlet side fin assembly 20 will be described. As shown in Figs. 1 to 4, an upper wall of the apparatus body 10 is formed with slits 61A, 62A, 63A extending in the front-back direction while being separated in the left-right direction. As shown in Fig. 4, guide passages 61, 62, 63 of an upper side guide passage group 60 (first guide passage group) are formed by closing openings of the vehicle room side of these slits 61A, 62A, 63A by protrusions 41, 42, 43 formed on the cover frame 40.

The guide passages 61, 62, 63 have linear shapes but are not in parallel with each other, and are formed so as to gradually increase mutual distances from the back end toward the vehicle room side. More concretely, the central (intermediate) guide passage 62 (reference guide passage) extends along an axis line direction (airflow direction) of the ventilation path 15, and the left and right guide passages 61, 63 extend so as to be separated from the guide passage 62 toward the vehicle room in the left-right direction.

The shaft parts 21a, 22a, 23a of the upper ends of the fins 21, 22, 23 are rotatably and slidably inserted into the guide passages 61, 62, 63, respectively.

The central guide passage 62 has a narrowed part 62x (first narrowed part) for holding the shaft part 22a in the back end of the guide passage 62, and a narrowed part 62y (second narrowed part) for holding the shaft part 22a in the end of the vehicle room side in the guide passage 62. A passage width of each of these narrowed parts 62x, 62y is smaller than a diameter of each of the shaft parts 21a, 22a, 23a. In the present embodiment, the narrowed parts 62x, 62y are formed by small projections projected from both wall surfaces of the guide passage 62, but may be formed by small projections projected from one wall surface.

As shown in Fig. 2, the lower end of the apparatus body 10 is formed with protrusions 71A, 72A, 73A mutually separated in the left-right direction, and these protrusions 71A, 72A, 73A are respectively formed with slit-shaped guide passages 71, 72, 73 whose both ends are closed while extending in the front-back direction. A lower side guide passage group 70 (second guide passage group) is constructed by these guide passages 71, 72, 73.

When viewed from directions of the swing axis lines L1, L2, L3, the lower side guide passages 71, 72, 73 are respectively in positions overlapping with the corresponding upper side guide passages 61, 62, 63, and have substantially the same shape. Concretely, the guide passages 71, 72, 73 also have linear shapes but are not in parallel, and are formed so as to gradually increase mutual distances from the back end toward the vehicle room side, and the central guide passage 72 has first and second narrowed parts (not shown).

The shaft parts 21b, 22b, 23b of the lower ends of the fins 21, 22, 23 are rotatably and slidably inserted into the guide passages 71, 72, 73, respectively.

As shown in Fig. 3, the back side fin assembly 30 has plural (for example, five) fins 31..., a coupling link 35 for coupling these fins 31.... The fins 31... are mutually spaced in the vertical direction, and have elongated plate shapes extending in the left-right direction. The fins 31... are supported in left and right side walls of the apparatus body 10 so as to be swingable around a swing axis line horizontally extending in the left-right direction in substantially the center of a width direction of the fins 31.... The coupling link 35 extends in the vertical direction, and is coupled in the vicinity of the back end of the fins 31... rotatably around an axis line parallel to the swing axis line. The fins 31... are in substantially parallel with each other.

The back side fin assembly 30 is interlocked with the operating knob 26. In brief, the back end of the operating knob 26 is formed with a slit 26a extending in the front-back direction, and a pin 31a extending in the left-right direction formed on the end of the vehicle room side in the central fin 31 is rotatably inserted into this slit 26a.

First, action of the back side fin assembly 30 will be described in the register apparatus having the above configuration. As shown in Fig. 3, when the operating knob 26 is slid in the vertical direction along the central fin 22, the pin 31a of the central fin 31 of the back side fin assembly 30 is moved in the vertical direction and with this movement, the central fin 31 is swung around the horizontal swing axis line and further, the other fins 31 are swung through the coupling link 35. As a result, a blow direction is adjusted in the vertical direction.

Next, action of the blow outlet side fin assembly 20 will be described.

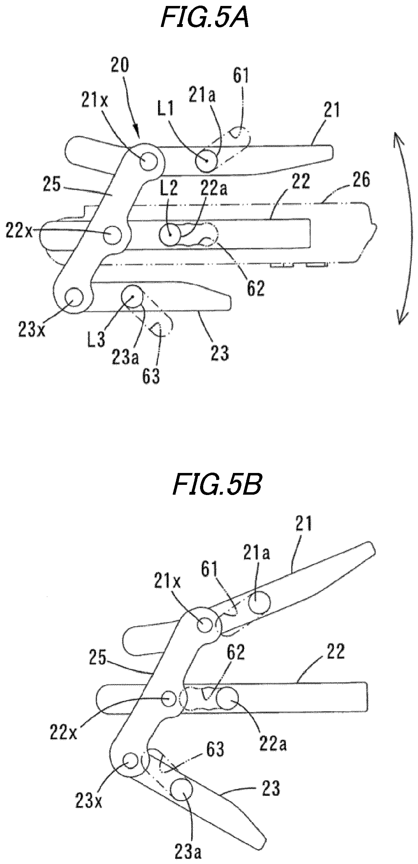

As shown in Figs. 3 and 5A, in a state in which the shaft parts 21a, 21b of the fin 21 are positioned in the back end of the guide passages 61, 71 and the shaft parts 22a, 22b of the fin 22 are positioned in the back end of the guide passages 62, 72 and the shaft parts 23a, 23b of the fin 23 are positioned in the back end of the guide passages 63, 73, the fins 21, 22, 23 are in parallel with each other and the blow outlet side fin assembly 20 constructs a parallel link mechanism.

Fig. 5A shows a reference attitude along the axis line direction (airflow direction) of the ventilation path 15. In this reference attitude, air flowing through the ventilation path 15 is blown without being bent in the left-right direction.

When the operating knob 26 is gripped and moved in the left-right direction as shown by arrow of Fig. 5A, the central fin 22 is swung around the swing axis line L2 and the other fins 21, 23 are also swung around the swing axis lines L1, L3 through the coupling links 25. As a result, the blow direction can be adjusted in the left-right direction.

As shown in Fig. 5A, the fins 21, 22, 23 are maintained in parallel, with the result that the air is not diffused and is blown in the adjusted direction (spot blowing mode).

As shown by an imaginary line in Fig. 4, the shaft parts 22a, 22b are held in the back end by the first narrowed part 62x (a first narrowed part of the guide passage 72 is not shown) of the central guide passages 62, 72, with the result that the spot blowing mode can be maintained stably.

When the operating knob 26 is gripped and the central fin 22 is pulled out to the vehicle room side in the reference attitude of Fig. 5A, the shaft parts 22a, 22b of the central fin 22 are slid in the guide passages 62, 72 to reach the end of the vehicle room side as shown in Fig. 5B. The fin 22 is moved linearly toward the vehicle room with an attitude along the axis line of the apparatus body 10 maintained. When the fin 22 is pulled out, the fins 21, 23 are also moved to the vehicle room side through the coupling links 25. Accordingly, the shaft parts 21a, 21b of the fin 21 are slid in the guide passages 61, 71 to reach the end of the vehicle room side, and the shaft parts 23a, 23b of the fin 23 are slid in the guide passages 63, 73 to reach the end of the vehicle room side.

Since the guide passages 61, 62, 63 are formed so as to be separated toward the vehicle room and the guide passages 71, 72, 73 are formed similarly, when the fins 21, 22, 23 are pulled out toward the vehicle room, the shaft parts 21a, 22a, 23a are mutually separated in the left-right direction from the time of spot blowing, and the shaft parts 21b, 22b, 23b are also mutually separated in the left-right direction, with the result that the fins 21, 22, 23 change from a parallel state at the time of spot blowing to a state diffused toward the vehicle room as shown in Fig. 5B. As a result, air is blown in an angle range wide in the left-right direction (diffusion blowing mode), and a crew can receive mild blowing.

As described above, when the fin 22 is pulled out, the shaft part 22a passes through the narrowed parts 62x, 62y of the guide passage 62, and this passing is enabled by elastic deformation of the apparatus body 10 made of resin. The shaft part 22a reaching the end of the vehicle room side of the guide passage 62 is regulated by the narrowed part 62y and the shaft part 22b is similarly regulated in the end of the room inside of the guide passage 72, with the result that the diffusion blowing mode can be maintained stably.

When the operating knob 26 is pushed in a direction opposite to the above, the fins 21, 22, 23 are moved toward the back, and switching from the diffusion blowing mode to the spot blowing mode can be performed.

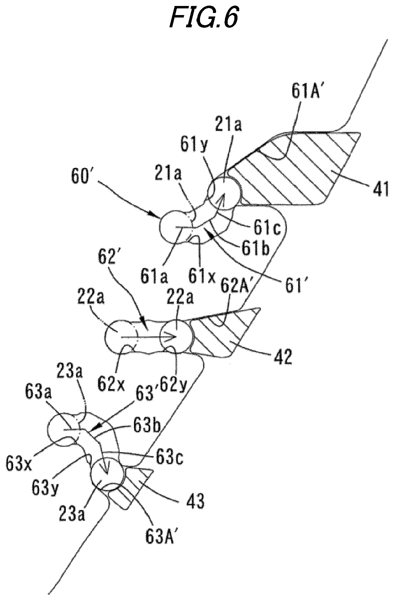

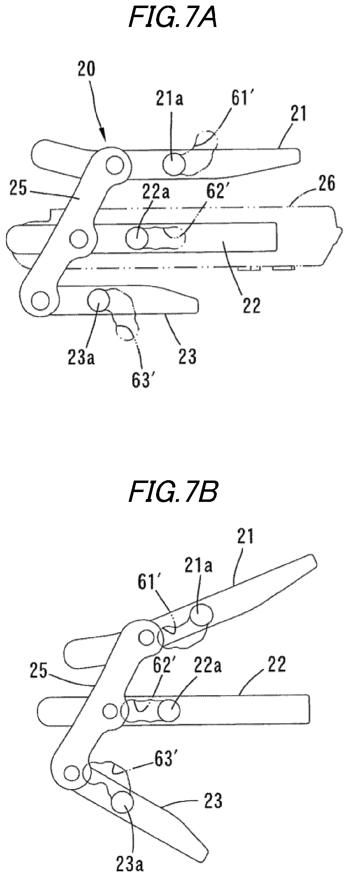

Figs. 6, 7A and 7B show a register apparatus according to a second embodiment according to the invention In the second embodiment, the same numeral or the same numeral with "'" is assigned to a component corresponding to that of the first embodiment and its detailed description is omitted.

A central guide passage 62' has a linear shape and extends along an airflow direction like the guide passage 62 of the first embodiment, but guide passages 61', 63' of both sides have bent shapes. Hereinafter, detailed description will be made.

As shown in Fig. 6, the guide passages 61', 63' of both sides are respectively constructed by joining back side passage portions 61a, 63a, intermediate passage portions 61b, 63b, and vehicle room side passage portions 61c, 63c. The back side passage portions 61a, 63a are in parallel with the central guide passage 62'. The intermediate passage portions 61b, 63b are inclined to the central guide passage 62' so as to be mutually separated in the left-right direction toward the vehicle room. The vehicle room side passage portions 61c, 63c are also inclined to the central guide passage 62' so as to be mutually separated in the left-right direction toward the vehicle room, but angles of inclination of the vehicle room side passage portions 61c, 63c are larger than angles of inclination of the intermediate passage portions 61b, 63b.

In the second embodiment, like the central guide passage 62', the guide passages 61', 63' of both sides have first narrowed parts 61x, 63x and second narrowed parts 61y, 63y, respectively.

A lower side guide passage group (not shown) is similarly constructed.

In the configuration described above, switching between a spot blowing mode shown in Fig. 7A and a diffusion blowing mode shown in Fig. 7B is similar to that of the first embodiment, with the result that the detailed description is omitted. However, in the present embodiment, when an operating knob 26 is gripped and a central fin 22 and fins 21, 23 of both sides are pulled out, the back side passage portions 61a, 63a of the guide passages 61', 63' of both sides are in parallel with the central guide passage 62', with the result that there is no resistance except the narrowed parts 61x, 62x, 63x, and initial operation is facilitated. When the fins are further pulled out, the operation resistance is increased stepwise.

The same applies to action of lower side guide passages and lower side shaft parts of the fins 21, 22, 23.

In the second embodiment, each of the guide passages 61', 63' are curved in a curved shape.

Also, the back side passage portions 61a, 63a of the guide passages 61', 63' of both sides may be inclined to the central guide passage 62' so as to be mutually separated toward the vehicle room side. In this case, angles of inclination of the back side passage portions 61a, 63a to the central guide passage 62' are made smaller than angles of inclination of the intermediate passage portions 61b, 63b to the central guide passage 62'.

Embodiments are not limited to the exemplary embodiments described above and further, various aspects can be implemented without departing from the scope of the invention as defined in the appended claims.

In the exemplary embodiments described above, the casing used as the apparatus body is formed with the guide passage, but the apparatus body may be constructed of a casing and a guide member attached to this casing to form this guide member with a guide passage.

In the exemplary embodiments described above, the shaft parts of both ends of the fin, that is, the first and second shaft parts are slid along the guide passages of the first and second guide passage groups, but the apparatus body may be formed with only the first guide passage group for guiding one shaft part, for example, the first shaft part. In this case, the second shaft part which is the other shaft part is rotatably supported in a hole formed in the apparatus body. In this configuration, when the fins are pulled out, the first shaft part is slid along the guide passages of the first guide passage group with the second shaft part held in the hole and thereby, the fins are diffused toward the vehicle room while being inclined.

When many fins are mounted and many guide passages are formed, for example, two intermediate guide passages may extend parallel.

The number of coupling links 25 may be one.

It may be constructed so that the blow outlet side fin assembly adjusts a wind direction in the vertical direction and the back side fin assembly adjusts the wind direction in the left-right direction. In this case, it is constructed so that the blow outlet side fin assembly includes plural fins which extend in the left-right direction and are spaced in the vertical direction and when the fins are pulled out to the vehicle room side, the fins are guided to guide passages formed in left and right walls of the apparatus body and are diffused in the vertical direction.

The number of fins of the blow outlet side fin assembly is not limited and also, the shape of the apparatus body is not limited.

The back side fin assembly may be omitted.

The invention is applicable to a register apparatus for air conditioning of a vehicle.

According to the invention, the vehicular register apparatus 1 includes an apparatus body 10 and a fin assembly 20. The apparatus body 10 includes a ventilation path 15. The ventilation path 15 has an upstream end connected to an air conditioner and a downstream end provided as a blow outlet to a vehicle room. The fin assembly 20 is arranged in the ventilation path 15. The fin assembly 20 includes a plurality of fins 21, 22, 23. The plurality of fins 21, 22, 23 are spaced to each other in a first direction intersecting with an airflow direction in the ventilation path 15, each of the plurality of fins 21, 22, 23 extends in a second direction intersecting with the airflow direction and the first direction. The plurality of fins 21, 22, 23 respectively have first and second shaft parts 21a, 22a, 23a, 21b, 22b, 23b on both ends of the fins 21, 22, 23 in the second direction. The plurality of fins 21, 22, 23 are swingably supported on the apparatus body 10 through these first and second shaft parts 21a, 22a, 23a, 21b, 22b, 23b. A coupling link 25 which extends in the first direction is rotatably coupled to the plurality of fins 21, 22, 23. Each of the plurality of fins 21, 22, 23 is coupled to the coupling link 25 in a back side from a swing axis line passing through the corresponding first and second shaft parts 21a, 22a, 23a, 21b, 22b, 23b. The apparatus body 10 includes a plurality of guide passages 62', 63', 71, 72, 73 that swingably and slidably support at least ones of the first and second shaft parts 21a, 22a, 23a, 21b, 22b, 23b of the respective plurality of fins 21, 22, 23. The plurality of guide passages 61', 62', 63', 71, 72, 73 are formed so as to be apart in the first direction from each other toward the vehicle room.

According to the configuration described above, the fins would be switched from a spot blowing mode to a diffusion blowing mode by pulling out the one fin of the fin assembly toward the vehicle room, and the fins would be switched from the diffusion blowing mode to the spot blowing mode by pushing in the fin toward the back. Thus, the blowing mode would be switched by simple operation. Also, in the case of switching to the diffusion blowing mode, the fins are diffused while being moved near to the blow outlet, with the result that a diffusion effect of blowing would be increased. Moreover, in a configuration for switching of the blowing mode, the apparatus body has only to be formed with the guide passages, with the result that the configuration is simple and low-cost.

According to the invention, the apparatus body 10 includes a first guide passage group 60' including the plurality of guide passages 61', 62', 63' that swingably and slidably support the first shaft parts 21a, 22a, 23a of the respective plurality of fins 21, 22, 23, and a second guide passage group 70 including the plurality of guide passages 71, 72, 73 that swingably and slidably support the second shaft parts 21b, 22b, 23b of the respective plurality of fins 21, 22, 23.

According to the configuration described above, in the case of switching of the blowing mode, both ends of the fins are moved, with the result that stable switching operation would be implemented and further, the diffusion effect of blowing would be increased more.

According to the invention, the plurality of fins include a reference fin 22 intermediately positioned in the first direction, and fins 21, 23 positioned in both sides of the reference fin 22. The plurality of guide passages 61', 62', 63', 71, 72, 73 of each of the first and second guide passage groups 60', 70 may include a reference guide passage 62', 72 intermediately positioned in the first direction, and guide passages 61', 63', 71, 73 positioned in both sides of the reference guide passage 62', 72, corresponding to the reference fin 22 and the fins 21, 23 of both sides. The reference guide passage 62', 72 may extend linearly along the airflow direction. The guide passages 61', 63', 71, 73 of both sides may be mutually separated in opposite directions from the reference guide passage toward the vehicle room.

According to the configuration described above, the blowing mode would smoothly be switched by moving the reference fin substantially linearly.

In each of the first and second guide passage groups 60', 70, at least the reference guide passage 62', 72 may have a first narrowed part 62x that regulates corresponding one of first and second shaft parts 22a, 22b of the reference fin 22 in a back end of the reference guide passage 62', 72, and a second narrowed part 62y that regulates the corresponding one of first and second shaft part 22a, 22b in an end of a vehicle room side in the guide passage 62', 72. Passage widths of the first and second narrowed parts 62x, 62y may be smaller than diameters of the corresponding one of the first and second shaft parts 22a, 22b. The corresponding one of the first and second shaft parts 22a, 22b may be capable of passing through the first and second narrowed parts 62x, 62y with elastic deformation of the apparatus body 10.

According to the configuration described above, the spot blowing mode would stably be maintained by the first narrowed part, and the diffusion blowing mode would stably be maintained by the second narrowed part.

The reference fin 22 may be provided with an operating knob 26.

According to the configuration described above, switching of the blowing mode and adjustment of wind direction in the spot blowing mode would be performed by gripping the operating knob and operating the reference fin.

In each of the first and second guide passage groups 60', 70, a back side passage portion 61a, 63a of each of the guide passages 61'. 63', 71, 73 of both sides is in parallel with the reference guide passage 62', 72 or has a small angle of inclination to the reference guide passage, and a vehicle room side passage portion 61c, 63c of each of the guide passages 61', 63', 71, 73 of both sides has an angle of inclination to the reference guide passage 62', 72 larger than that of the back side passage portion 61a, 63a.

According to the configuration described above, initial operation would be facilitated in the case of switching from the spot blowing mode to the diffusion blowing mode.

According to the invention, in each of the first and second guide passage groups 60', 70, each of the guide passages 61', 63', 71, 73 of both sides has an intermediate passage portion 61b, 63b between the back side passage portion 61a, 63a and the vehicle room side passage portion 61c, 63c. The intermediate passage portion 61b, 63b has the angle of inclination to the reference guide passage 62', 72 larger than that of the back side passage portion 61a, 63a and smaller than that of the vehicle room side passage portion 61c, 63c.

According to the configuration described above, operation resistance would be increased in a process of switching from the spot blowing mode to the diffusion blowing mode.

The vehicular register apparatus 1 may further include a back side fin assembly 30 arranged in a back side of the fin assembly 20 in the ventilation path. The back side fin assembly 30 may have a plurality of back side fins 31 which are spaced to each other in the second direction. Each of the plurality of back side fins 31 may be swingably supported in the apparatus body 10 around a swing axis line extending in the first direction. A coupling link 35 extending in the second direction may be rotatably coupled to the respective plurality of back side fins 31. The operating knob 26 may be slidable in the second direction on the reference fin 22. The operating knob 26 may be interlocked with one of the plurality of back side fins 31.

According to the configuration described above, switching of the blowing mode and adjustment of wind direction of two directions (for example, a left-right direction and a vertical direction) in the spot blowing mode would be performed by operation of the operating knob.

In accordance with the embodiments, it would be possible to switch between the spot blowing mode and the diffusion blowing mode by a simple structure and simple operation.

### <Description of Reference Numerals and Signs>

- 1: REGISTER APPARATUS
- 10: APPARATUS BODY
- 15: VENTILATION PATH
- 15y: BLOW OUTLET
- 20: BLOW OUTLET SIDE FIN ASSEMBLY
- 21,22,23: FIN
- 21a,22a,23a: UPPER SIDE SHAFT PART (FIRST SHAFT PART)
- 21b,22b,23b: LOWER SIDE SHAFT PART (SECOND SHAFT PART)
- 25: COUPLING LINK
- 30: BACK SIDE FIN ASSEMBLY
- 31: FIN
- 35: COUPLING LINK
- 60,60': UPPER SIDE GUIDE PASSAGE GROUP (FIRST GUIDE PASSAGE GROUP)
- 61,62,63,61',62',63': UPPER SIDE GUIDE PASSAGE
- 61a,63a: BACK SIDE PASSAGE PORTION
- 61b,63b: INTERMEDIATE PASSAGE PORTION
- 61c,63c: VEHICLE ROOM SIDE PASSAGE PORTION
- 62x: FIRST NARROWED PART
- 62y: SECOND NARROWED PART
- 70: LOWER SIDE GUIDE PASSAGE GROUP (SECOND GUIDE PASSAGE GROUP)
- 71,72,73: LOWER SIDE GUIDE PASSAGE

## Claims

1. A vehicular register apparatus (1) comprising:
an apparatus body (10); and
a fin assembly (20),
wherein the apparatus body (10) includes a ventilation path (15),
wherein the ventilation path (15) has an upstream end connected to an air conditioner and a downstream end provided as a blow outlet to a vehicle room,
wherein the fin assembly (20) is arranged in the ventilation path (15),
wherein the fin assembly (20) includes a plurality of fins (21, 22, 23),
wherein the plurality of fins (21, 22, 23) are spaced to each other in a first direction intersecting with an airflow direction in the ventilation path (15), wherein each of the plurality of fins (21, 22, 23) extends in a second direction intersecting with the airflow direction and the first direction,
wherein the plurality of fins (21, 22, 23) respectively have first and second shaft parts (21a, 22a, 23a, 21b, 22b, 23b) on both ends of the fins (21, 22, 23) in the second direction,
wherein the plurality of fins (21, 22, 23) are swingably supported on the apparatus body (10) through these first and second shaft parts (21a, 22a, 23a, 21b, 22b, 23b),
wherein a coupling link (25) which extends in the first direction is rotatably coupled to the plurality of fins (21, 22, 23),
wherein each of the plurality of fins (21, 22, 23) is coupled to the coupling link (25) in a back side from a swing axis line passing through the corresponding first and second shaft parts (21a, 22a, 23a, 21b, 22b, 23b),
wherein the apparatus body (10) includes a plurality of guide passages (61', 62', 63', 71, 72, 73) that swingably and slidably support at least ones of the first and second shaft parts (21a, 22a, 23a, 21b, 22b, 23b) of the respective plurality of fins (21, 22, 23),
wherein the plurality of guide passages (61', 62', 63', 71, 72, 73) are formed so as to be apart in the first direction from each other toward the vehicle room,
wherein the apparatus body (10) includes a first guide passage group (60') including the plurality of guide passages (61', 62', 63') that swingably and slidably support the first shaft parts (21a, 22a, 23a) of the respective plurality of fins (21, 22, 23) and a second guide passage group (70) including the plurality of guide passages (71, 72, 73) that swingably and slidably support the second shaft parts (21b, 22b, 23b) of the respective plurality of fins (21, 22, 23),
wherein the plurality of fins include a reference fin (22) intermediately positioned in the first direction, and fins (21, 23) positioned in both sides of the reference fin (22),
wherein the plurality of guide passages (61', 62', 63', 71, 72, 73) of each of the first and second guide passage groups (60, 60', 70) include a reference guide passage (62', 72) intermediately positioned in the first direction, and guide passages (61', 63', 71, 73) positioned in both sides of the reference guide passage (62', 72), corresponding to the reference fin (22) and the fins (21, 23) of both sides,
wherein the reference guide passage (62', 72) extends linearly along the airflow direction,
wherein the guide passages (61',63', 71, 73) of both sides are mutually separated in opposite directions from the reference guide passage toward the vehicle room,
wherein in each of the first and second guide passage groups ( 60', 70), a back side passage portion (61a, 63a) of each of the guide passages (61', 63', 71, 73) of both sides is in parallel with the reference guide passage (62', 72) or has a small angle of inclination to the reference guide passage, and a vehicle room side passage portion (61c, 63c) of each of the guide passages (61', 63', 71, 73) of both sides has an angle of inclination to the rcfcrcncc guide passage (62', 72) larger than that of the back side passage portion (61a, 63a),
wherein in each of the first and second guide passage groups (60', 70), each of the guide passages (61', 63', 71, 73) of both sides has an intermediate passage portion (61b, 63b) between the back side passage portion (61a, 63a) and the vehicle room side passage portion (61c, 63c), and
**characterised in that** the intermediate passage portion (61b, 63b) has the angle of inclination to the reference guide passage (62', 72) larger than that of the back side passage portion (61a, 63a) and smaller than that of the vehicle room side passage portion (61c, 63c).

2. The vehicular register apparatus (1) according to claim 1, wherein in each of the first and second guide passage groups ( 60', 70), at least the reference guide passage (62', 72) has a first narrowed part (62x) that regulates corresponding one of first and second shaft parts (22a, 22b) of the reference fin (22) in a back end of the reference guide passage (62', 72), and a second narrowed part (62y) that regulates the corresponding one of first and second shaft part (22a, 22b) in an end of a vehicle room side in the guide passage (62', 72),
wherein passage widths of the first and second narrowed parts (62x, 62y) are smaller than diameters of the corresponding one of the first and second shaft parts (22a, 22b), and
wherein the corresponding one of the first and second shaft parts (22a, 22b) is capable of passing through the first and second narrowed parts (62x, 62y) with elastic deformation of the apparatus body (10).

3. The vehicular register apparatus (1) according to claim 1 or 2, wherein the reference fin (22) is provided with an operating knob (26).

4. The vehicular register apparatus (1) according to claim 3, further comprising:
a back side fin assembly (30) arranged in a back side of the fin assembly (20) in the ventilation path,
wherein the back side fin assembly (30) has a plurality of back side fins (31) which are spaced to each other in the second direction,
wherein each of the plurality of back side fins (31) is swingably supported in the apparatus body (10) around a swing axis line extending in the first direction,
wherein a coupling link (35) extending in the second direction is rotatably coupled to the respective plurality of back side fins (31),
wherein the operating knob (26) is slidable in the second direction on the reference fin (22), and
wherein the operating knob (26) is interlocked with one of the plurality of back side fins (31).

## Patentansprüche

1. Luftausströmer (1) für ein Fahrzeug aufweisend:
ein Luftausströmergehäuse (10); und
eine Lamellenanordnung (20),
wobei das Luftausströmergehäuse (10) einen Strömungspfad (15) aufweist,
wobei der Strömungspfad (15) ein vorgelagertes Ende, welches mit einer Klimaanlage verbunden ist, und ein nachgelagertes Ende, welches als ein Luftstromauslass in den Fahrzeugraum hinein vorgesehen ist, aufweist,
wobei die Lamellenanordnung (20) im Strömungspfad (15) angeordnet ist,
wobei die Lamellenanordnung (20) eine Vielzahl an Lamellen (21, 22, 23) umfasst,
wobei die Vielzahl an Lamellen (21, 22, 23) in einer ersten Richtung, die eine Luftströmungsrichtung im Strömungspfad (15) schneidet, zueinander beabstandet angeordnet ist, wobei sich jede der Vielzahl an Lamellen (21, 22, 23) in einer zweiten Richtung, die die Luftströmungsrichtung und die erste Richtung schneidet, erstreckt,
wobei die Vielzahl an Lamellen (21, 22, 23) jeweils erste und zweite Achsenglieder (21a, 22a, 23a, 21b, 22b, 23b) an beiden Enden der Lamellen (21, 22, 23) in der zweiten Richtung aufweist,
wobei die Vielzahl an Lamellen (21, 22, 23) durch diese ersten und zweiten Achsenglieder (21a, 22a, 23a, 21b, 22b, 23b) schwenkbeweglich an dem Luftausströmergehäuse (10) gelagert ist,
wobei ein Koppelglied (25), welches sich in der ersten Richtung erstreckt, mit der Vielzahl an Lamellen (21, 22, 23) drehbar gekoppelt ist,
wobei jede der Vielzahl an Lamellen (21, 22, 23) mit dem Koppelglied (25) auf einer Rückseite von einer Schwenkachsenlinie, die durch die entsprechenden ersten und zweiten Achsenglieder (21a, 22a, 23a, 21b, 22b, 23b) verläuft, gekoppelt ist,
wobei das Luftausströmergehäuse (10) eine Vielzahl an Führungsbahnen (61', 62', 63', 71, 72, 73) aufweist, die mindestens ein erstes und zweites Achsenglied (21a, 22a, 23a, 21b, 22b, 23b) der jeweiligen Vielzahl an Lamellen (21, 22, 23) schwenkbar und gleitend lagern,
wobei die Vielzahl an Führungsbahnen (61', 62', 63', 71, 72, 73) so ausgebildet ist, dass sie in der ersten Richtung zum Fahrzeugraum hin voneinander beabstandet sind,
wobei das Luftausströmergehäuse (10) eine erste Führungsbahngruppe (60'), welche die Vielzahl an Führungsbahnen (61', 62', 63') aufweist, die die ersten Achsenglieder (21a, 22a, 23a) der jeweiligen Vielzahl an Lamellen (21, 22, 23) schwenkbar und gleitend lagern, und eine zweite Führungsbahngruppe (70), welche die Vielzahl an Führungsbahnen (71, 72, 73) aufweist, die die zweiten Achsenglieder (21b, 22b, 23b) der jeweiligen Vielzahl an Lamellen (21, 22, 23) schwenkbar und gleitend lagern, aufweist,
wobei die Vielzahl an Lamellen eine in der ersten Richtung dazwischenliegend angeordnete Referenzlamelle (22) und Lamellen (21, 23), die auf beiden Seiten der Referenzlamelle (22) angeordnet sind, aufweist,
wobei die Vielzahl an Führungsbahnen (61', 62', 63', 71, 72, 73) von jeder der ersten und zweiten Führungsbahngruppe (60, 60', 70) eine in der ersten Richtung dazwischenliegend angeordnete Referenzführungsbahn (62', 72) und auf beiden Seiten der Referenzführungsbahn (62', 72) angeordnete Führungsbahnen (61', 63', 71, 73) aufweist, die der Referenzlamelle (22) und den Lamellen (21, 23) auf beiden Seiten entsprechen,
wobei sich die Referenzführungsbahn (62', 72) linear entlang der Luftströmungsrichtung erstreckt,
wobei die Führungsbahnen (61', 63', 71, 73) beider Seiten in entgegengesetzte Richtungen von der Referenzführungsbahn zum Fahrzeugraum hin voneinander getrennt sind,
wobei in jeder der ersten und zweiten Führungsbahngruppe (60', 70) ein rückseitiger Bahnabschnitt (61a, 63a) von jeder der Führungsbahnen (61', 63', 71, 73) beider Seiten parallel zu der Referenzführungsbahn (62', 72) verläuft oder einen kleinen Neigungswinkel zu der Referenzführungsbahn aufweist, und ein fahrzeugraumseitiger Bahnabschnitt (61c, 63c) von jeder der Führungsbahnen (61', 63', 71, 73) beider Seiten einen Neigungswinkel zu der Referenzführungsbahn (62', 72) aufweist, der größer als der des rückseitigen Bahnabschnitts (61a, 63a) ist
wobei in jeder der ersten und zweiten Führungsbahngruppe (60', 70) jede der Führungsbahnen (61', 63', 71, 73) beider Seiten einen Zwischenbahnabschnitt (61b, 63b) zwischen dem rückseitigen Bahnabschnitt (61a, 63a) und dem fahrzeugraumseitigen Bahnabschnitt (61c, 63c) aufweist, und **dadurch gekennzeichnet, dass**
der Neigungswinkel des Zwischenbahnabschnitts (61b, 63b) zur Referenzführungsbahn (62', 72) größer als der des rückseitigen Bahnabschnitts (61a, 63a) und kleiner als der des fahrzeugraumseitigen Bahnabschnitts (61c, 63c) ist.

2. Luftausströmer (1) für ein Fahrzeug nach Patentanspruch 1, wobei in jeder der ersten und zweiten Führungsbahngruppe (60', 70) wenigstens die Referenzführungsbahn (62', 72) einen ersten verengten Bereich (62x), der das entsprechende der ersten oder zweiten Achsenglieder (22a, 22b) der Referenzlamelle (22) in einem hinteren Ende der Referenzführungsbahn (62', 72) begrenzt, und einen zweiten verengten Bereich (62y), der das entsprechende des ersten oder zweiten Achsenglieds (22a, 22b) an einem Ende der Fahrzeugraumseite der Referenzführungsbahn (62', 72) begrenzt, aufweist,
wobei Bahnweiten der ersten und zweiten verengten Bereiche (62x, 62y) schmaler als der Durchmesser der entsprechenden ersten oder zweiten Achsenglieder (22a, 22b) sind, und
wobei das entsprechende der ersten oder zweiten Achsenglieder (22a, 22b) durch die ersten und zweiten verengten Bereiche (62x, 62y) unter elastischer Verformung des Luftausströmergehäuses (10) durchführbar ist.

3. Luftausströmer (1) für ein Fahrzeug nach Patentanspruch 1 oder 2, wobei die Referenzlamelle (22) mit einem Bedienknopf (26) versehen ist.

4. Luftausströmer (1) für ein Fahrzeug nach Patentanspruch 3, weiterhin aufweisend:
eine hintere Lamellenanordnung (30), die an einer Rückseite der Lamellenanordnung (20) im Strömungspfad angeordnet ist,
wobei die hintere Lamellenanordnung (30) eine Vielzahl an hinteren Lamellen (31) aufweist, die in der zweiten Richtung voneinander beabstandet sind,
wobei jede der Vielzahl an hinteren Lamellen (31) in dem Luftausströmergehäuse (10) um eine Schwenkachsenlinie, die sich in der ersten Richtung erstreckt, schwenkbar gelagert ist
wobei ein sich in der zweiten Richtung erstreckendes Koppelglied (35) drehbar mit der entsprechenden Vielzahl an hinteren Lamellen (31) gekoppelt ist,
wobei der Bedienknopf (26) in der zweiten Richtung auf der Referenzlamelle (22) verschiebbar ist, und
wobei der Bedienknopf (26) mit einer der Vielzahl an hinteren Lamellen (31) verrastet ist.

## Revendications

1. Aérateur de véhicule (1) comprenant :
un corps d'appareil (10) ; et
un ensemble d'ailettes (20),
dans lequel le corps d'appareil (10) comprend une trajectoire de ventilation (15),
dans lequel la trajectoire de ventilation (15) a une extrémité en amont raccordée à un climatiseur et une extrémité en aval prévue en tant que sortie de soufflage dans un habitacle de véhicule,
dans lequel l'ensemble d'ailettes (20) est agencé dans la trajectoire de ventilation (15),
dans lequel l'ensemble d'ailettes (20) comprend une pluralité d'ailettes (21, 22, 23),
dans lequel la pluralité d'ailettes (21, 22, 23) sont espacées les unes des autres dans une première direction coupant une direction d'écoulement d'air dans la trajectoire de ventilation (15), dans lequel chacune de la pluralité d'ailettes (21, 22, 23) s'étend dans une seconde direction coupant la direction d'écoulement d'air et la première direction,
dans lequel la pluralité d'ailettes (21, 22, 23) ont respectivement des première et seconde parties d'arbre (21a, 22a, 23a, 21b, 22b, 23b) sur les deux extrémités des ailettes (21, 22, 23) dans la seconde direction,
dans lequel la pluralité d'ailettes (21, 22, 23) sont supportées, de manière oscillante, sur le corps d'appareil (10) par le biais de ces première et seconde parties d'arbre (21a, 22a, 23a, 21b, 22b, 23b),
dans lequel une liaison de couplage (25) qui s'étend dans la première direction est couplée, en rotation, à la pluralité d'ailettes (21, 22, 23),
dans lequel chacune de la pluralité d'ailettes (21, 22, 23) est couplée à la liaison de couplage (25) sur un côté arrière par rapport à une ligne axiale oscillante passant par les première et seconde parties d'arbre (21a, 22a, 23a, 21b, 22b, 23b) correspondantes,
dans lequel le corps d'appareil (10) comprend une pluralité de passages de guidage (61', 62', 63', 71, 72, 73) qui supportent, de manière oscillante et coulissante, au moins certaines des première et seconde parties d'arbre (21a, 22a, 23a, 21b, 22b, 23b) de la pluralité respective d'ailettes (21, 22, 23),
dans lequel la pluralité de passages de guidage (61', 62', 63', 71, 72, 73) sont formés afin d'être espacés, dans la première direction, les uns des autres vers l'habitacle du véhicule,
dans lequel le corps d'appareil (10) comprend un premier groupe de passages de guidage (60') comprenant la pluralité de passages de guidage (61', 62', 63') qui supportent, de manière oscillante et coulissante, les premières parties d'arbre (21a, 22a, 23a) de la pluralité respective d'ailettes (21, 22, 23) et un second groupe de passages de guidage (70) comprenant la pluralité de passages de guidage (71, 72, 73) qui supportent, de manière oscillante et coulissante, les secondes parties d'arbre (21b, 22b, 23b) de la pluralité respective d'ailettes (21, 22, 23),
dans lequel la pluralité d'ailettes comprennent une ailette de référence (22) positionnée, de manière intermédiaire, dans la première direction, et des ailettes (21, 23) positionnées des deux côtés de l'ailettes de référence (22),
dans lequel la pluralité de passages de guidage (61', 62', 63', 71, 72, 73) de chacun des premier et second groupes de passages de guidage (60, 60', 70) comprennent un passage de guidage de référence (62', 72) positionné, de manière intermédiaire, dans la première direction, et des passages de guidage (61', 63, 63', 71, 73) positionnés des deux côtés du passage de guidage de référence (62', 72) correspondant à l'ailette de référence (22) et aux ailettes (21, 23) des deux côtés,
dans lequel le passage de guidage de référence (62', 72) s'étend de manière linéaire le long de la direction d'écoulement d'air,
dans lequel les passages de guidage (61', 63', 71, 73) des deux côtés sont mutuellement séparés dans des directions opposées du passage de guidage de référence vers l'habitacle du véhicule,
dans lequel, dans chacun des premier et second groupes de passages de guidage (60', 70), une partie de passage du côté arrière (61a, 63a) de chacun des passages de guidage (61', 63', 71, 73) des deux côtés est parallèle au passage de guidage de référence (62', 72) ou a un petit angle d'inclinaison par rapport au passage de guidage de référence, et une partie de passage du côté de l'habitacle du véhicule (61c, 63c) de chacun des passages de guidage (61', 63', 71, 73) des deux côtés a un angle d'inclinaison par rapport au passage de guidage de référence (62', 72) supérieur à celui de la partie de passage du côté arrière (61a, 63a),
dans lequel, dans chacun des premier et second groupes de passages de guidage (60', 70), chacun des passages de guidage (61', 63', 71, 73) des deux côtés a une partie de passage intermédiaire (61b, 63b) entre la partie de passage du côté arrière (61a, 63a) et la partie de passage du côté de l'habitacle du véhicule (61c, 63c), et
**caractérisé en ce que** la partie de passage intermédiaire (61b, 63b) a l'angle d'inclinaison par rapport au passage de guidage de référence (62', 72) supérieur à celui de la partie de passage du côté arrière (61a, 63a) et inférieur à celui de la partie de passage du côté de l'habitacle du véhicule (61c, 63c).

2. Aérateur de véhicule (1) selon la revendication 1, dans lequel, dans chacun des premier et second groupes de passages de guidage (60', 70), au moins le passage de guidage de référence (62', 72) a une première partie rétrécie (62x) qui régule une partie correspondante des première et seconde parties d'arbre (22a, 22b) de l'ailette de référence (22) dans une extrémité arrière du passage de guidage de référence (62', 72) et une seconde partie rétrécie (62y) qui régule la partie correspondante des première et seconde parties d'arbre (22a, 22b) dans une extrémité d'un côté de l'habitacle du véhicule dans le passage de guidage (62', 72),
dans lequel les largeurs de passage des première et seconde parties rétrécies (62x, 62y) sont inférieures aux diamètres de la partie correspondante des première et seconde parties d'arbre (22a, 22b), et
dans lequel la partie correspondante des première et seconde parties d'arbre (22a, 22b) est capable de passer par les première et seconde parties rétrécies (62x, 62y) avec une déformation élastique du corps d'appareil (10).

3. Aérateur de véhicule (1) selon la revendication 1 ou 2, dans lequel l'ailette de référence (22) est prévue avec un bouton d'actionnement (26).

4. Aérateur de véhicule (1) selon la revendication 3, comprenant en outre :
un ensemble d'ailettes du côté arrière (30) agencé dans un côté arrière de l'ensemble d'ailettes (20) dans la trajectoire de ventilation,
dans lequel l'ensemble d'ailettes du côté arrière (30) a une pluralité d'ailettes du côté arrière (31) qui sont espacées les unes des autres dans la seconde direction,
dans lequel chacune de la pluralité d'ailettes du côté arrière (31) est supportée, de manière oscillante, dans le corps d'appareil (10) autour d'une ligne axiale oscillante s'étendant dans la première direction,
dans lequel une liaison de couplage (35) s'étendant dans la seconde direction est couplée, de manière rotative, à la pluralité respective d'ailettes du côté arrière (31),
dans lequel le bouton d'actionnement (26) peut coulisser dans la seconde direction sur l'ailette de référence (22), et
dans lequel le bouton d'actionnement (26) est verrouillé avec l'une de la pluralité d'ailettes du côté arrière (31).
